# FASCICULE DE BREVET EUROPEEN

(11) **EP 2 414 300 B1**
(45) Date de publication et mention de la délivrance du brevet: **16.05.2018**
(21) Numéro de dépôt: 10723201.9
(22) Date de dépôt: 02.04.2010
(51) Int. Cl.: A47G 19/22, B05B 7/22, B05D 1/02, B28B 11/00, B28B 21/00, B28B 21/72, C03C 17/00, C03C 17/02, C03C 1/00

(54) **PROCÉDÉ DE FABRICATION D'UN RÉCIPIENT EN VERRE ET RÉCIPIENT CORRESPONDANT**
VERFAHREN ZUR HERSTELLUNG EINES GLASBEHÄLTERS UND ENTSPRECHENDER BEHÄLTER
METHOD FOR MANUFACTURING A GLASS CONTAINER, AND CORRESPONDING CONTAINER

(30) Priorité: 03.04.2009 FR 0952201
(43) Date de publication de la demande: 08.02.2012
(73) Titulaire: Verescence France, 92800 Puteaux (FR)
(72) Inventeur: WAGNER, Christophe, F-76370 Neuville les Dieppe (FR)
(74) Mandataire: Weber, Jean-François
(86) Numéro de dépôt international: PCT/FR2010/050648
(87) Numéro de publication internationale: WO 2010/112792

(56) Documents cités:
- EP-A1- 0 294 830
- WO-A1-2009/019729
- WO-A2-2006/054227
- DE-A1- 19 801 861
- WALTHER M ET AL: "PACKAGING OF SENSITIVE PARENTERAL DRUGS IN GLASS CONTAINERS WITH A QUARTZ-LIKE SURFACE" PHARMACEUTICAL TECHNOLOGY EUROPE - BIOPHARM, ADVANSTAR COMMUNICATIONS, CHESTER, GB, vol. 8, no. 5, 1 janvier 1996 (1996-01-01) , pages 22,24-27, XP000827860

## Description

### DOMAINE TECHNIQUE

La présente invention se rapporte au domaine général des corps creux pourvus d'une surface en verre utilisables dans différents secteurs industriels, et en particulier dans le secteur de l'emballage (récipients en verre, du genre flacons ou pots, destinés à contenir une substance liquide ou pâteuse, comme par exemple une substance cosmétique). L'invention concerne également le domaine technique du traitement des récipients en verre, dans un but fonctionnel et/ou décoratif, notamment dans le secteur cosmétique.

L'invention concerne plus précisément un procédé de fabrication d'un récipient comprenant une paroi en verre délimitant une cavité d'accueil pour un produit destiné à être administré à un être humain ou à un animal.

L'invention concerne également un récipient comprenant une paroi en verre délimitant une cavité d'accueil pour un produit destiné à être administré à un être humain ou à un animal.

### TECHNIQUE ANTERIEURE

Il est connu de recourir à des récipients en verre pour contenir des produits liquides, en particulier dans les secteurs des industries cosmétique, pharmaceutique ou alimentaire. En particulier, l'utilisation de verre pour la réalisation de récipients à parfum liquide est particulièrement prisée, compte-tenu du caractère noble généralement prêté au verre par les consommateurs, et des qualités objectives de transparence, de robustesse, et de stabilité mécanique et chimique de ce matériau. C'est pourquoi, la totalité ou quasitotalité des parfums corporels liquides, et en particulier des parfums considérés comme « *haut de gamme* », sont contenus dans des flacons en verre. Les qualités esthétiques d'un flacon à parfum s'avèrent d'ailleurs extrêmement importantes pour l'attractivité commerciale globale d'un parfum. Dans cette optique, il s'avère donc essentiel de proposer un flacon de parfum dont l'esthétique est très nettement différente de celle des flacons de la concurrence, et présente un caractère particulièrement attractif et valorisant pour le parfum contenu dans le flacon.
Cette tâche est toutefois rendue difficile pour deux raisons principales.
La première de ces raisons tient au fait que le verre est, du fait de sa nature même, un matériau singulièrement difficile à travailler et à décorer dans des conditions économiques acceptables, ce qui est pourtant primordial dans des secteurs économiques « *grand public* » comme le secteur de la parfumerie.
La seconde raison est relative à l'environnement auquel est soumis le verre constituant les flacons de parfum et le contexte général d'utilisation de ces flacons. En particulier, l'intérieur d'un flacon de parfum est en contact direct avec le parfum lui-même, qui consiste habituellement en un liquide alcoolique. Cela signifie que toute décoration disposée sur la surface intérieure du flacon, afin d'être visible par transparence de l'extérieur par le consommateur, doit supporter d'être en permanence et à long terme baignée dans une telle solution alcoolique, sans se déliter, se désagréger, se décomposer ou se dissoudre, ce qui constitue un véritable défi technique.
Outre les effets catastrophiques en termes d'image de marque que pourrait engendrer une détérioration d'une décoration intérieure de flacon sous l'effet de son immersion prolongée dans le parfum liquide, une telle détérioration pourrait également entraîner des problèmes sanitaires dans la mesure où la composition du parfum s'en trouverait modifiée et contiendrait une phase plus ou moins dispersée de la matière ayant auparavant constitué le décor de la surface intérieure du flacon.
Ainsi, alors qu'il est extrêmement Intéressant, au moins pour des raisons esthétiques, de décorer la surface intérieure d'un flacon en verre de façon qu'elle soit visible par transparence de l'extérieur, un tel décor intérieur s'avère extrêmement délicat à réaliser en pratique compte-tenu de l'agressivité du milieu alcoolique ambiant et de la difficulté à faire tenir un revêtement sur un substrat de verre.

Par ailleurs, le document DE 198 01 861 décrit un procédé de dépôt d'une couche dite sol-gel à l'intérieur d'un récipient semi-fini présentant une cavité interne.

### EXPOSE DE L'INVENTION

Les objets assignés à l'invention visent en conséquence à porter remède à la problématique exposée dans ce qui précède et à proposer un nouveau procédé de fabrication d'un récipient comprenant une paroi en verre, permettant d'obtenir un récipient qui, tout en étant particulièrement attractif du point de vue esthétique, présente une excellente résistance hydrolytique et est également particulièrement sûr pour l'utilisateur.

Un autre objet de l'invention vise à proposer un nouveau procédé de fabrication d'un récipient comprenant une paroi en verre, qui permet d'obtenir un récipient particulièrement esthétique et résistant à l'usage, tant du point de vue mécanique que du point de vue chimique, tout en étant parfaitement sûr du point de vue sanitaire.

Un autre objet de l'invention vise à proposer un nouveau procédé de fabrication d'un récipient comprenant une paroi en verre, qui est apte à être mis en oeuvre de façon industrielle.

Un autre objet de l'invention vise à proposer un nouveau procédé de fabrication d'un récipient comprenant une paroi en verre, qui permet de conférer des propriétés spécifiques audit récipient de façon particulièrement stable et sûre.

Un autre objet de l'invention vise à proposer un nouveau procédé de fabrication d'un récipient comprenant une paroi en verre, permettant d'obtenir un flacon qui présente un excellent aspect, sans défaut visible.

Un autre objet de l'invention vise à proposer un nouveau procédé de fabrication d'un récipient comprenant une paroi en verre, qui permet d'obtenir, de façon particulièrement rapide et bon marché, un récipient aux propriétés améliorées.

Un autre objet de l'invention vise à proposer un nouveau procédé de fabrication d'un récipient comprenant une paroi en verre, qui permet d'obtenir un récipient capable d'accueillir de manière stable et durable une substance fluide, et en particulier une substance fluide relativement agressive du point de vue chimique.

Un autre objet de l'invention vise à proposer un nouveau récipient comprenant une paroi en verre, qui tout en étant particulièrement attractif du point de vue esthétique, soit également particulièrement sûr à l'usage pour l'utilisateur.

Un autre objet de l'invention vise à proposer un nouveau récipient comprenant une paroi en verre, qui soit particulièrement esthétique et résistant à l'usage, tant du point de vue mécanique que du point de vue chimique, tout en étant parfaitement sûr du point de vue sanitaire.

Un autre objet de l'invention vise à proposer un nouveau récipient comprenant une paroi en verre, qui est apte à être produit de façon industrielle.

Les objets assignés à l'invention sont atteints à l'aide d'un procédé selon la revendication 1.

Les objets assignés à l'invention sont également atteints à l'aide d'un récipient selon la revendication 25.

### DESCRIPTIF SOMMAIRE DES DESSINS

D'autres objets et avantages de l'invention apparaîtront mieux à la lecture de la description qui suit, ainsi qu'à l'aide des dessins annexés, donnés à titre purement illustratif et non limitatif, dans lesquels :
- La figure 1 illustre, selon une vue schématique en perspective, un récipient conforme à l'invention, constitué en l'espèce par un flacon destiné à accueillir un parfum corporel liquide, ledit flacon étant fermé par un bouchon.
- La figure 2 illustre, selon une vue schématique en coupe, le flacon de la figure 1 ouvert.

### MEILLEURE MANIERE DE REALISER L'INVENTION

L'invention concerne un procédé de fabrication d'un récipient 1 comprenant une paroi 2 en verre délimitant une cavité 3 d'accueil pour un produit destiné à être administré à un être humain ou à un animal.
Le terme « *administré* » doit être compris ici dans un sens extensif, c'est-à-dire qu'il est susceptible de désigner une application du produit par toute voie et par tout moyen, ledit produit pouvant être par exemple appliqué sur la peau, une muqueuse ou des phanères (produit cosmétique, pharmaceutique, etc.), ou être ingéré (aliment, médicament, etc.), étant entendu que l'invention revendiquée est limitée à un produit qui est un parfum corporel. De façon préférentielle, le récipient 1 est conçu pour contenir une substance liquide ou pâteuse dans sa cavité 3, et par exemple un liquide alcoolique tel qu'un parfum corporel comme revendiqué. Dans ce cas, le récipient 1 est avantageusement destiné à être fermé à l'aide d'un organe de fermeture 5, constitué par exemple par un bouchon 5A.
Dans la variante préférentielle illustrée aux figures, le récipient 1 est un flacon destiné à recevoir un parfum corporel. Dans ce mode de réalisation préféré, le procédé conforme à l'invention consiste donc en un procédé de fabrication d'un flacon destiné à contenir une substance cosmétique liquide ou pâteuse, et de préférence un liquide alcoolique parfumé constitué majoritairement d'éthanol, et de préférence comprenant au moins 90% d'éthanol. Dans ce qui suit, pour des raisons de simplicité de description, seule la fabrication d'un flacon à parfum sera détaillée, à titre purement illustratif et non limitatif.

Le procédé conforme à l'invention comprend tout d'abord une étape de fourniture, ou de fabrication par tout moyen connu, d'un récipient 1 comprenant une paroi 2 en verre délimitant une cavité 3 d'accueil pour le produit destiné à être administré. Le terme *« verre* » doit être ici compris dans son acception classique, et désigne donc un verre minéral, et de préférence un verre de silice. De préférence, le verre constituant la paroi 2 est un verre blanc, transparent, et par exemple un verre sodo-calcique ou un verre boro-silicate. Avantageusement et pour des raisons qui seront précisées ci-après, le verre constituant la paroi 2 n'est pas un cristal, ni un verre au plomb, c'est-à-dire qu'il présente une teneur en plomb sensiblement nulle ou faible, par exemple inférieure à 20%, et de préférence inférieure à 10%.Avantageusement, le récipient 1 est constitué par une pièce d'un seul tenant intégralement réalisée en verre. Dans ce cas, la paroi 2 en verre est formée par un fond 2A en verre, une paroi latérale 2B en verre qui s'élève à partir et à la périphérie dudit fond 2A et un goulot 2C qui ferme le flacon tout en ménageant une ouverture 7 de remplissage/distribution permettant de mettre en communication la cavité 3 avec l'extérieur.

De préférence et comme évoqué précédemment, l'ouverture 7 coopère avec un organe de fermeture 5, constitué de préférence par un bouchon 5A, pour fermer le flacon. L'obtention d'un tel flacon en verre est parfaitement connue en tant que telle et peut être obtenue par tout procédé verrier classique.

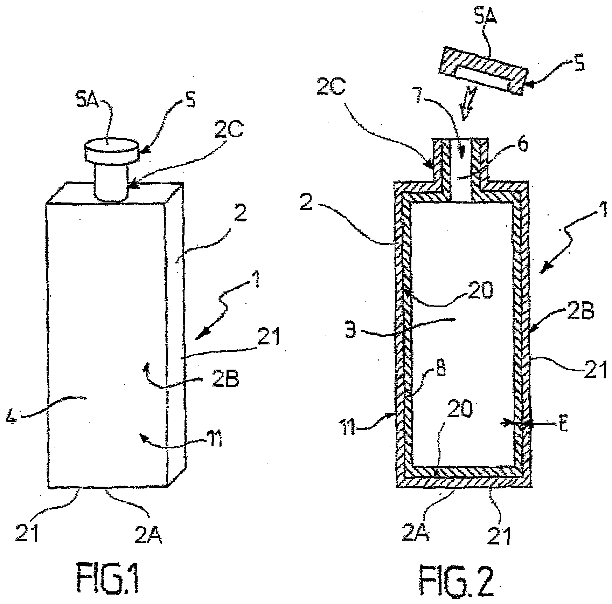

Tel que cela est illustré aux figures, la paroi 2 en verre présente une face interne 20, située en regard de la cavité 3 d'accueil, et une face externe 21 opposée. La paroi 2 en verre forme ainsi un corps creux évidé dont la face interne 20 délimite directement la cavité 3, laquelle forme un volume intérieur vide entièrement fermé, à l'exception de l'ouverture 7 vers l'extérieur dont la section est réduite par rapport à la section moyenne de la cavité 3, comme illustré à la figure 2. Une telle configuration est caractéristique d'un flacon pourvu d'un goulot, c'est-à-dire d'un col étroit permettant de mettre en communication l'intérieur du flacon avec l'extérieur.

Le procédé comprend en outre une étape de recouvrement d'au moins une fraction de ladite paroi 2 en verre, et plus précisément d'au moins une fraction de ladite face interne 20, par un matériau vitreux 8 élaboré selon un procédé sol-gel. Les procédés sol-gel sont bien connus en tant que tels. Ils permettent d'obtenir des matériaux vitreux, proches ou identiques au verre, et en particulier au verre de silice, sans recourir à une fusion, par simple polymérisation de précurseurs moléculaires.

Le recours à un procédé sol-gel pour revêtir la paroi 2 en verre d'un récipient conçu pour contenir un produit destiné à être administré à un être humain ou à un animal est particulièrement intéressant, notamment pour la triple raison suivante :
1) Il permet de résoudre les problèmes d'affinité avec le verre, qui rendent généralement extrêmement délicate toute tentative de déposer un revêtement à la surface d'une paroi en verre. En effet, les procédés sol-gel permettent d'obtenir des matériaux vitreux dont la nature est proche, voire identique, à celle de la paroi 2 en verre du récipient, de sorte qu'il existe alors une affinité forte et une compatibilité totale entre le matériau vitreux de recouvrement et le substrat formé par la paroi 2 en verre. Cette affinité permet une excellente tenue du matériau vitreux 8 de recouvrement, conduisant ainsi à l'obtention d'un récipient robuste à l'usage, dont le revêtement ne se désagrège pas à l'usage.
2) Un récipient est par nature creux, de sorte que sa paroi 2, en l'occurrence en verre, forme une surface gauche complexe difficile à recouvrir, particulièrement dans le cas d'un flacon pourvu d'un goulot restreignant l'accès à la cavité 3. La mise en oeuvre d'un procédé sol-gel permet de surmonter cet inconvénient, dans la mesure où elle est basée sur la mise en oeuvre de matériaux initialement en solution, ce qui facilite les opérations de recouvrement.
3) Enfin, le recours à un procédé sol-gel permet de bénéficier très simplement, dans un cadre industriel, d'un grand nombre d'effets décoratifs et/ou fonctionnels variés qui permettent de rendre le flacon particulièrement attractif tant du point de vue esthétique que du point de vue fonctionnel. A cette fin, la paroi 2 en verre est avantageusement translucide ou transparente, de façon que le matériau vitreux 8 soit visible de l'extérieur.

Comme évoqué précédemment, la fraction de la paroi 2 en verre recouverte par ledit matériau vitreux 8 lors de l'étape de recouvrement fait partie de la face interne 20 de la paroi 2. En d'autres termes, le matériau vitreux 8 recouvre, de préférence directement, au moins la surface intérieure du flacon, laquelle délimite directement la cavité 3.

L'étape de recouvrement est menée de façon que le matériau vitreux 8 recouvre ladite fraction de la face interne 20 selon une masse surfacique qui n'excède sensiblement pas 70 g/m², et qui est de préférence comprise entre sensiblement 30 et 60 g/m², de façon encore plus préférentielle entre sensiblement 40 et 60 g/m², par exemple environ 50 g/m².

La mise en oeuvre d'un matériau vitreux 8 selon une telle masse surfacique permet d'obtenir un excellent effet de protection, et en particulier de protection hydrolytique, de la paroi 2 en verre, tout en permettant l'obtention d'effets esthétiques remarquables, grâce par exemple à l'inclusion de pigments dispersés dans le matériau vitreux 8. Le matériau vitreux 8 peut ainsi présenter une couleur opaque, transparente ou translucide. Les plages de masse surfacique indiquées ci-avant permettent en outre de limiter et même de sensiblement empêcher un éventuel phénomène de craquellement de la couche sol-gel formant le matériau 8.Avantageusement, le procédé comprend, préalablement à l'étape de recouvrement, une étape de préparation d'un sol sensiblement homogène et liquide par mélange d'au moins les substances suivantes :
- un précurseur pourvu de groupements alcoxy,
- un solvant alcoolique pour ledit précurseur,
- et de l'eau.

Le sol contient par exemple au moins un précurseur de matrice minérale, comme par exemple un précurseur du silicium (par exemple un alcoxyde de silicium), permettant d'obtenir un réseau minéral, comme par exemple un réseau de silice. Il est également envisageable que le sol contienne au moins un précurseur de matrice hybride (précurseur mixte organo-minéral), comme par exemple un organo-alcoxysilane, permettant d'obtenir un réseau organo-minéral, par exemple un réseau de silice auquel restent fixées des fonctions organiques. Il est également envisageable d'inclure des précurseurs de métal, comme par exemple un précurseur à l'aluminium. Différents précurseurs moléculaires peuvent être mélangés pour obtenir le sol, le choix des précurseurs étant effectué notamment en regard des propriétés attendues du matériau vitreux 8, de sa teneur en substances fonctionnelles (pigments, colorants, etc.) et de la nature desdites substances fonctionnelles. Ainsi, l'invention vise un matériau vitreux 8 comprenant notamment un réseau minéral et/ou un réseau organo-minéral (hybride) et/ou un réseau hybride mixte (incorporant un métal, tel que l'aluminium).

Avantageusement, lesdites substances mélangées pour obtenir ledit sol comprennent en outre une ou plusieurs substance(s) fonctionnelle(s) choisie(s) dans le groupe suivant : colorant, agent microbicide, médicament.

Par exemple, dans un mode de réalisation préféré, où l'on cherche à décorer un flacon en verre, le sol sera avantageusement formé par une solution liquide incluant :
- un précurseur pourvu de groupements alcoxy,
- un solvant alcoolique pour ledit précurseur,
- un colorant, constitué par exemple de pigments dispersés dans la solution,
- et de l'eau.

Par exemple, ledit colorant comprend des pigments minéraux, combiné par exemple avec des précurseurs de réseau minéral ou hybride ou hybride mixte, de façon à obtenir un réseau minéral ou hybride ou hybride mixte dans lequel sont englobés les pigments minéraux. Il est également envisageable de recourir à des pigments ou teintures organiques combinés avec des précurseurs de réseau hybride ou hybride mixte, de façon à obtenir un réseau hybride ou hybride mixte dans lequel sont englobés lesdits pigments ou teintures organiques.

Dans d'autres applications non revendiquées en tant que telles, en particulier des applications pharmaceutiques, le sol comprendra plutôt, au lieu d'un colorant, une substance active du genre agent microbicide permettant de préserver, voire d'améliorer, les qualités sanitaires du produit destiné à être contenu dans le flacon.

Avantageusement, le matériau vitreux 8 recouvrant la face interne 20 est poreux, c'est-à-dire qu'il ne procure sensiblement pas d'effet barrière anti-migration permettant d'empêcher la migration intempestive dans le contenu du récipient 1 de substances qui sont soit contenues dans la paroi en verre 2 soit présentes (par exemple sous forme d'une couche de coloration) entre cette dernière et la couche de matériau 8. Le caractère poreux du matériau 8 va toutefois de pair avec une absence de relargage des molécules constituant ledit matériau 8. Ainsi, il est avantageux de déposer (par un procédé sol-gel) directement sur le verre nu de la face interne 20 un matériau vitreux 8 qui, tout en étant poreux, incorpore une dispersion de pigments (minéraux ou organiques) capturés de manière stable et permanente dans le réseau moléculaire du matériau 8, lesdits pigments n'étant pas de ce fait susceptibles de migrer dans le contenu du récipient 1. Dans ce cas, il est préférable que le verre constituant la paroi 2 ne soit pas un verre au plomb, car le matériau vitreux 8, du fait de son caractère poreux, ne constituera pas une barrière empêchant la migration intempestive du plomb dans le contenu.

Avantageusement, le procédé conforme à l'invention comprend, préalablement à l'étape de recouvrement, une étape de rinçage de la paroi 2 en verre, effectuée par exemple à l'aide d'eau distillée, en vue d'obtenir une propreté suffisante de la paroi 2 en verre et permettre ainsi le bon déroulement ultérieur de l'étape de recouvrement.

Le procédé peut également comprendre, préalablement à l'étape de recouvrement, une étape d'activation de ladite fraction de la paroi 2 en verre, afin de faciliter l'adhérence du sol à ladite fraction de la paroi 2 en verre. Cette étape d'activation peut par exemple consister en une activation chimique à l'aide d'acide (type HCl) ou de base (type soude).

Avantageusement, l'étape de recouvrement est mise en oeuvre alors que la fraction de la paroi 2 en verre est portée à une température comprise entre sensiblement 18° et 200°C. De préférence, l'étape de recouvrement est mise en oeuvre alors que ladite fraction de la paroi 2 en verre est à température ambiante (environ 20°C), ce qui permet d'économiser de l'énergie. Toutefois, selon le procédé sol-gel mis en oeuvre, il peut être intéressant de chauffer le récipient, et donc la paroi 2 en verre, pour améliorer les conditions de mise en oeuvre du sol-gel, et en particulier la tenue du sol sur la paroi 2 en verre.

Avantageusement, l'étape de recouvrement comprend une opération de dépose, de préférence sur le verre nu, d'une couche du sol sur ladite fraction de la paroi 2 en verre, alors que ledit sol se trouve à l'état sensiblement liquide. En d'autres termes la paroi 2, et plus précisément la face interne 20, est laquée avec le sol. Avantageusement, l'opération de dépose consiste à déposer la couche de sol directement sur la fraction de la face interne 20, c'est-à-dire sur le verre nu formant la face interne 20.

Cette dépose du sol à l'état liquide permet de recouvrir de façon particulièrement simple et homogène, compte-tenu de la fluidité du sol, la fraction (et de préférence sensiblement la totalité) de la paroi 2 en verre, même lorsque ladite paroi 2 présente une forme complexe et/ou est située à l'intérieur du récipient 1. Ainsi, le procédé est dans ce cas particulièrement adapté pour revêtir l'intérieur du récipient, c'est-à-dire la face interne 20 de la paroi 2 en verre, comme illustré à la figure 2. Bien entendu, l'invention n'est absolument pas limitée à un recouvrement de la face interne 20, il est tout à fait envisageable que la face externe 21 soit également revêtue, ou que seulement ladite face externe 21 soit revêtue.

Avantageusement, l'opération de dépose de la couche de sol est menée de façon à déposer ladite couche dudit sol sur ladite fraction de la face interne 20 selon une masse surfacique qui n'excède sensiblement pas 100 g/m². La mise en oeuvre d'une telle masse surfacique permet d'optimiser le comportement du sol lors des étapes ultérieures de gélification et de séchage qui seront décrites ci-après, et d'éviter notamment tout craquellement du revêtement. De préférence, l'opération de dépose est menée de façon à déposer ladite couche dudit sol selon une masse surfacique qui est de préférence comprise entre sensiblement 50 et 100 g/m², et de façon encore plus préférentielle entre sensiblement 70 et 90 g/m², ce qui permet d'obtenir une excellente stabilité lors de l'opération de séchage qui sera décrite ci-après. Dans un mode de réalisation particulièrement préféré, l'opération de dépose est menée de façon à déposer ladite couche dudit sol selon une masse surfacique d'environ 85 g/m². Une telle masse surfacique permet, en particulier lorsqu'elle est mise en oeuvre sur la face interne 20 d'un flacon de parfum intégralement en verre de contenance sensiblement égale à 130 ml, d'obtenir à l'issue du procédé un revêtement extrêmement homogène et exempt de défauts (craquelures).

Avantageusement, ladite opération de dépose du sol sur la fraction de la paroi 2 en verre comprend une vaporisation dudit sol sur ladite fraction de la face interne 20. En d'autres termes, le sol est dans ce cas pulvérisé sur la paroi 2 en verre, et plus précisément sur la face interne 20, sous la forme de fines gouttelettes (spray). Une telle vaporisation peut par exemple être effectuée à l'aide d'une buse de projection introduite dans la cavité d'accueil 3 du récipient 1 (par exemple par l'ouverture 7), un mouvement de rotation et de translation relatif du récipient 1 et de la buse étant mis en oeuvre pour que la solution de sol soit pulvérisée uniformément et de façon homogène sur toute la surface intérieure (face interne 20) du récipient 1 à traiter. Une mise en contact de la paroi 2 en verre avec le sol par vaporisation de ce dernier est particulièrement intéressante car elle permet un traitement industrialisé rapide, avec une quantité de sol bien inférieure à celle qui serait requise pour la mise en oeuvre de toute autre méthode de mise en contact. Il est cependant envisageable, à titre alternatif, que ladite opération de dépose mette en oeuvre non pas une vaporisation du sol mais un remplissage de la cavité 3 par le sol, la cavité 3 étant ensuite vidée de façon qu'il ne reste qu'une pellicule de sol sur la paroi 2 en verre. D'autres méthodes classiques de dépôt peuvent également être mises en oeuvre, la pulvérisation étant toutefois préférée pour les raisons évoquées plus haut.

Dans le cas préférentiel où l'opération de dépose comprend une vaporisation du sol, comme évoqué précédemment, la tenue du sol sur la paroi 2 en verre dépend principalement des paramètres suivants :
- température de la paroi 2 en verre, qui est par exemple comprise entre 18 et 200°C, et est de préférence à température ambiante,
- vitesse de rotation relative de la buse de vaporisation et du flacon,
- pression de vaporisation,
- orientation du jet produit par la buse,
- et débit de vaporisation de la buse.

En jouant sur ces paramètres, il est ainsi possible d'obtenir un dépôt de sol homogène, qui tient bien sur la paroi 2 en verre et qui est susceptible de conduire ultérieurement à un matériau vitreux 8 se présentant sous la forme d'une couche de revêtement robuste et exempte de défauts.

Avantageusement, le procédé conforme à l'invention comprend une étape de gélification du sol déposé sur ladite fraction de la paroi 2 en verre. Un telle étape de gélification est classique dans un procédé sol-gel. De préférence, cette gélification s'effectue par la mise en oeuvre des réactions suivantes :
- hydrolyse du précurseur (qui est de préférence pourvu de groupements alcoxy et comprend de préférence du silicium) en présence de l'eau que contient le sol, ce qui conduit à la formation de groupements silanol,
- et condensation desdits groupements silanol (polymérisation),
ladite étape de gélification conduisant à l'obtention d'une couche de gel recouvrant ladite fraction de la face interne 20 de la paroi 2 en verre.

Avantageusement, lesdites substances mélangées pour obtenir le sol comprennent en outre un catalyseur d'hydrolyse, et de préférence un catalyseur d'hydrolyse acide tel que l'acide acétique. La présence d'un tel catalyseur d'hydrolyse permet de faciliter et d'accélérer la réaction d'hydrolyse du précurseur, tout en permettant d'obtenir un plus grand nombre de réseaux linéaires qui s'entrecroisent pour la formation de la couche de gel à la surface de la fraction de la paroi 2 en verre.

Le recours à un catalyseur d'hydrolyse acide n'est bien entendu pas obligatoire, et il est par exemple tout à fait envisageable de recourir à un catalyseur d'hydrolyse basique.

Dans ce mode de réalisation préférentiel, l'étape de gélification du sol s'effectue donc spontanément, par réaction progressive des substances constituant ledit sol, et plus précisément par hydrolyse catalysée du précurseur. Le sol forme donc une substance instable qui évolue spontanément vers un gel. De manière préférentielle, la composition du sol sera choisie pour que ce dernier reste liquide pendant une durée suffisante pour permettre son application industrielle. Par exemple, le sol pourra avantageusement être conçu pour rester à l'état liquide pendant plusieurs heures une fois qu'il est élaboré.

Par exemple, le précurseur renfermé par le sol-gel peut être un métal ou un métalloïde avec des radicaux réactifs (typiquement un mélange d'alcoxysilanes) comme TEOS ou MTEOS. De préférence, le précurseur comprend au moins un composé organométallique, de préférence un alcoolate.

Avantageusement, le procédé comprend une étape de séchage de la couche de gel obtenue à l'issue de l'étape de gélification et qui recouvre ladite fraction de la paroi 2 en verre, par chauffage de ladite couche de gel dans des conditions permettant l'extraction de sensiblement la totalité du solvant (qui est de préférence un solvant alcoolique) hors du gel, ce dernier se transformant alors en ledit matériau vitreux 8, lequel est de préférence un verre de silice, ou du moins un verre à base de silice, c'est-à-dire un matériau vitreux ou pseudo-vitreux présentant des caractéristiques similaires ou sensiblement identiques à celle d'un verre obtenu par un procédé verrier classique de fusion.

Avantageusement, l'étape de séchage s'effectue dans un four pourvu d'un système de renouvellement d'atmosphère, par exemple une ventilation, permettant de renouveler en permanence l'air dans l'enceinte de cuisson et évacuer ainsi le solvant extrait hors du gel par chauffage.

La mise en oeuvre de cette opération d'extraction positive du solvant hors du gel est avantageuse, car elle permet d'éviter toute pollution du produit destiné à être contenu dans la cavité 3 par le solvant.

Avantageusement, l'étape de séchage comprend un cycle de chauffage du récipient 1 à une température comprise entre sensiblement 60 et 300°C. Le chauffage est mené de façon à éviter toute craquelure du matériau vitreux 8 issu du gel. A cette fin, il importe de régler le temps du séchage en fonction de la température de cuisson. Par exemple, la mise en oeuvre d'un séchage à 120°C ventilé pendant environ douze heures d'une couche de gel issue d'un sol déposé sur une masse surfacique d'environ 85 g/m² permet d'obtenir de bons résultats. Avantageusement, ledit matériau vitreux 8 recouvre, à l'issue de l'étape de séchage, ladite fraction de la paroi 2 en verre selon une masse surfacique qui n'excède sensiblement pas 70 g/m², et qui est de préférence comprise entre sensiblement 30 et 60 g/m², de façon encore plus préférentielle entre sensiblement 40 et 60 g/m², par exemple environ 50 g/m².

La mise en oeuvre d'un matériau vitreux 8 selon une telle masse surfacique permet d'obtenir un excellent effet de protection, et en particulier de protection hydrolytique, de la paroi 2 en verre, tout en permettant l'obtention d'effets esthétiques remarquables, grâce par exemple à l'inclusion de pigments dispersés dans le matériau vitreux 8. Le matériau vitreux 8 peut ainsi présenter une couleur opaque, transparente ou translucide.

Avantageusement, l'étape de séchage permet également d'opérer une cuisson de la couche de gel, afin de durcir cette dernière et le matériau vitreux 8 qui en découle.

L'invention concerne également en tant que tel un récipient 1 susceptible d'être obtenu par le procédé conforme à l'invention décrit dans ce qui précède, et de préférence directement obtenu par le procédé en question. Comme expliqué précédemment, le récipient 1 comprend une paroi 2 en verre délimitant une cavité d'accueil 3 pour un produit destiné à être administré à un être humain ou à un animal.

Au moins une fraction de ladite paroi 2 en verre est recouverte par un matériau vitreux, de préférence un verre de silice, ou à base de silice, élaboré selon un procédé sol-gel.

De préférence, ladite paroi 2 en verre présente, comme exposé précédemment, une face interne 20, située en regard de la cavité d'accueil 3, et une face externe 21 opposée, ladite fraction de la paroi 2 en verre recouverte par ledit matériau 8 faisant partie de la face interne 20. En d'autres termes, le matériau vitreux 8 obtenu par le procédé sol-gel est déposé sur la paroi interne du récipient 1, ce qui permet d'améliorer la robustesse du récipient 1, et en particulier sa résistance hydrolytique, et de conférer des propriétés fonctionnelles et/ou esthétiques remarquables au récipient 1. A cette fin et comme exposé dans ce qui précède, le matériau vitreux 8 incorpore avantageusement en son sein une ou plusieurs substance(s) fonctionnelle(s) choisie(s) dans le groupe suivant : colorant (pigments, minéraux ou organiques), agent microbicide, médicament.

Dans un mode de réalisation préféré, le récipient 1 constitue un flacon destiné à recevoir, en tant que produit à administrer, un liquide alcoolique, de préférence un parfum corporel. Dans le cas d'une telle application, le recours à un matériau vitreux, du type verre de silice, obtenu selon un procédé sol-gel, est particulièrement avantageux car il permet d'améliorer la résistance du flacon en verre contenant le parfum tout en conférant audit flacon un aspect visuel particulièrement attractif, par exemple par coloration de la face interne 20 grâce aux pigments, par exemple minéraux et/ou organiques, incorporés et dispersés dans le matériau vitreux 8, lequel peut présenter un aspect coloré opaque ou être transparent ou encore translucide. La paroi 2 en verre est elle-même de préférence translucide ou transparente, de façon que le matériau vitreux 8 soit visible de l'extérieur du récipient 1.

Avantageusement, le récipient est conçu pour que le matériau vitreux 8 soit en contact, de préférence direct, avec le produit à administrer.

Le recours à un procédé sol-gel permet un tel contact, qui évite d'avoir à revêtir le matériau vitreux 8 d'une couche de protection, dans la mesure où le procédé sol-gel permet d'obtenir un matériau inorganique amorphe, stable et non toxique qui peut donc être tout à fait mis en contact avec une substance susceptible d'être appliquée ou ingérée par un être vivant.

Comme évoqué précédemment, le matériau vitreux 8 se présente avantageusement sous la forme d'une couche recouvrant ladite fraction de la face interne 20 selon une masse surfacique qui n'excède sensiblement pas 70 g/m², et qui est de préférence comprise entre sensiblement 30 et 60 g/m², de façon encore plus préférentielle entre sensiblement 40 et 60 g/m², par exemple environ 50 g/m². La mise en oeuvre d'une telle masse surfacique permet un excellent compromis entre le prix de revient, l'augmentation de la résistance, en particulier hydrolytique du récipient 1 et l'amélioration de son aspect esthétique, en minimisant le risque d'apparition de craquelures de la couche sol-gel.

L'invention concerne par ailleurs, selon un aspect complémentaire non revendiqué en tant que tel susceptible de faire l'objet d'une protection indépendante, un procédé de fabrication d'un récipient 1 (de préférence un flacon pourvu d'un goulot) d'un seul tenant comprenant une paroi 2 en verre délimitant une cavité 3 d'accueil pour un produit destiné à être administré à un être humain ou à un animal, ladite paroi 2 en verre présentant une face interne 20 située en regard de ladite cavité 3 d'accueil, ledit procédé comprenant une étape de recouvrement d'au moins une fraction de ladite face interne 20 par un matériau vitreux élaboré selon un procédé sol-gel, ledit matériau vitreux 8 incluant de préférence des pigments de coloration, organiques ou minéraux.

Selon un autre aspect non revendiqué en tant que tel susceptible de faire l'objet d'une protection indépendante, l'invention concerne un procédé de fabrication d'un récipient 1 (de préférence un flacon pourvu d'un goulot) comprenant une paroi 2 en verre à teneur faible ou nulle en plomb (par exemple moins de 20%, de préférence moins de 10%) délimitant une cavité 3 d'accueil pour un produit destiné à être administré à un être humain ou à un animal, ladite paroi 2 en verre présentant une face interne 20 située en regard de ladite cavité 3 d'accueil, ledit procédé comprenant une étape de recouvrement d'au moins une fraction de ladite face interne 20 par un matériau vitreux élaboré selon un procédé sol-gel, ledit matériau vitreux 8 incluant de préférence des pigments de coloration, organiques ou minéraux et/ou présentant un caractère poreux.

Selon encore un autre aspect non revendiqué en tant que tel susceptible de faire l'objet d'une protection indépendante, l'invention concerne un procédé de fabrication d'un récipient 1 (de préférence un flacon pourvu d'un goulot) comprenant une paroi 2 en verre (de préférence à faible teneur en plomb) délimitant une cavité 3 d'accueil pour un produit destiné à être administré à un être humain ou à un animal, ladite paroi 2 en verre présentant une face interne 20 située en regard de ladite cavité 3 d'accueil et une face externe 21 opposée, ledit procédé comprenant une étape de recouvrement d'au moins une fraction de ladite face interne 20, et non de la face externe 21, par un matériau vitreux 8 élaboré selon un procédé sol-gel, ledit matériau vitreux 8 incluant de préférence des pigments de coloration, organiques ou minéraux et/ou présentant un caractère poreux et/ou recouvrant ladite fraction de la face interne (20) selon une masse surfacique qui n'excède sensiblement pas 70 g/m².

### POSSIBILITE D'APPLICATION INDUSTRIELLE

L'invention trouve son application industrielle dans la fabrication et l'ornementation de récipients, du genre flacons.

## Revendications

1. - Procédé de fabrication d'un récipient (1) comprenant une paroi (2) en verre délimitant une cavité (3) d'accueil, ledit récipient (1) étant conçu pour contenir un parfum corporel dans ladite cavité (3), ladite paroi (2) en verre présentant une face interne (20) située en regard de ladite cavité (3) d'accueil, ledit procédé étant **caractérisé en ce qu'**il comprend une étape de recouvrement d'au moins une fraction de ladite face interne (20) par un matériau vitreux élaboré selon un procédé sol-gel, de façon que ledit matériau vitreux (8) recouvre ladite fraction de la face interne (20) selon une masse surfacique qui n'excède pas 70 g/m², ledit matériau vitreux (8) incluant des pigments dispersés en son sein, ledit procédé comprenant, préalablement à ladite étape de recouvrement, une étape de fourniture ou de fabrication dudit récipient (1).

2. - Procédé selon la revendication 1 **caractérisé en ce que** lesdits pigments incluent des pigments minéraux.

3. - Procédé selon la revendication 1 ou 2 **caractérisé en ce que** lesdits pigments incluent des pigments organiques.

4. - Procédé selon l'une des revendications 1 à 3 **caractérisé en ce que** ledit matériau vitreux (8) recouvre ladite fraction de la face interne (20) selon une masse surfacique qui est comprise entre 30 et 60 g/m².

5. - Procédé selon la revendication 4 **caractérisé en ce que** ledit matériau vitreux (8) recouvre ladite fraction de la face interne (20) selon une masse surfacique qui est comprise entre 40 et 60 g/m².

6. - Procédé selon l'une des revendications 1 à 5 **caractérisé en ce qu'**il comprend, préalablement à ladite étape de recouvrement, une étape de préparation d'un sol sensiblement homogène et liquide par mélange d'au moins les substances suivantes :
- un précurseur pourvu de groupements alcoxy,
- un solvant, de préférence alcoolique, pour ledit précurseur,
- de l'eau,
- des pigments.

7. - Procédé selon la revendication 6 **caractérisé en ce que** lesdites substances mélangées pour obtenir ledit sol comprennent en outre une ou plusieurs substance(s) fonctionnelle(s) choisie(s) dans le groupe suivant : agent microbicide, médicament.

8. - Procédé selon l'une des revendications 6 et 7 **caractérisé en ce que** lesdites substances mélangées pour obtenir ledit sol comprennent en outre un catalyseur d'hydrolyse, et de préférence un catalyseur d'hydrolyse acide tel que l'acide acétique.

9. - Procédé selon l'une des revendications 6 à 8 **caractérisé en ce que** le précurseur comprend au moins un composé organométallique, de préférence un alcoolate.

10. -Procédé selon l'une des revendications 6 à 9 **caractérisé en ce que** ledit précurseur est un précurseur de matrice hybride permettant d'obtenir un réseau organo-minéral.

11. -Procédé selon l'une des revendication 6 à 10 **caractérisé en ce que** l'étape de recouvrement comprend une opération de dépose d'une couche dudit sol sur ladite fraction de ladite face interne (20), alors que ledit sol se trouve à l'état sensiblement liquide.

12. -Procédé selon la revendication 11 **caractérisé en ce que** l'opération de dépose consiste à déposer ladite couche de sol directement sur ladite fraction de ladite face interne (20).

13. - Procédé selon la revendication 11 ou 12 **caractérisé en ce que** l'opération de dépose est menée de façon à déposer ladite couche dudit sol sur ladite fraction de la face interne (20) selon une masse surfacique qui n'excède pas 100 g/m², et qui est de préférence comprise entre 50 et 100 g/m², de façon encore plus préférentielle entre 70 et 90 g/m², par exemple environ 85 g/m².

14. -Procédé selon l'une des revendications 11 à 13 **caractérisé en ce que** ladite opération de dépose comprend une pulvérisation dudit sol sur ladite fraction de la face interne (20).

15. - Procédé selon la revendication 14 **caractérisé en ce que** ladite pulvérisation est effectuée à l'aide d'une buse de projection introduite dans la cavité d'accueil (3) du récipient (1), un mouvement de rotation et de translation relatif du récipient (1) et de la buse étant mis en oeuvre pour que la solution de sol soit pulvérisée uniformément et de façon homogène sur toute la face interne (20).

16. - Procédé selon l'une des revendications 6 à 15 **caractérisé en ce qu'**il comprend une étape de gélification du sol déposé sur ladite fraction de la face interne (20), ladite gélification s'effectuant par la mise en oeuvre des réactions suivantes :
- hydrolyse du précurseur en présence de l'eau que contient le sol, ce qui conduit à la formation de groupements silanol,
- et condensation desdits groupements silanol,
ladite étape de gélification conduisant à l'obtention d'une couche de gel recouvrant ladite fraction de la face interne (20).

17. -Procédé selon la revendication 16 **caractérisé en ce qu'**il comprend une étape de séchage de ladite couche de gel recouvrant ladite fraction de la face interne (20), par chauffage de ladite couche de gel dans des conditions permettant l'extraction de sensiblement la totalité dudit solvant hors du gel, ce dernier se transformant alors en ledit matériau vitreux (8).

18. -Procédé selon la revendication 17 **caractérisé en ce que** l'étape de séchage comprend un cycle de chauffage du récipient (1) à une température comprise entre 60°C et 300°C.

19. -Procédé selon l'une des revendications 1 à 18 **caractérisé en ce que** ladite étape de recouvrement est mise en oeuvre alors que ladite fraction de la face interne (20) est portée à une température comprise entre 18°C et 200°C, de préférence à température ambiante.

20. -Procédé selon la revendication 19 **caractérisé en ce que** la paroi (2) en verre est chauffée pour améliorer la tenue du sol sur la paroi (2) en verre.

21. -Procédé selon l'une des revendications 6 à 20 **caractérisé en ce qu'**il comprend, préalablement à ladite étape de recouvrement, une étape d'activation de ladite fraction de la face interne (20), afin de faciliter l'adhérence du sol à ladite fraction de la face interne (20).

22. - Procédé selon l'une des revendications 1 à 21 **caractérisé en ce que** ledit matériau vitreux (8) comprend un réseau minéral et/ou un réseau organo-minéral et/ou un réseau hybride mixte.

23. -Procédé selon l'une des revendications 1 à 22 **caractérisé en ce que** ledit récipient est un flacon.

24. - Récipient (1) comprenant une paroi (2) en verre délimitant une cavité (3) d'accueil, ledit récipient (1) étant conçu pour contenir un parfum corporel dans ladite cavité (3), ladite paroi (2) en verre présentant une face interne (20) située en regard de ladite cavité (3) d'accueil, **caractérisé en ce qu'**au moins une fraction de ladite face interne (20) est recouverte par un matériau vitreux (8) élaboré selon un procédé sol-gel, ledit matériau vitreux (8) recouvrant ladite fraction de la face interne (20) selon une masse surfacique qui n'excède pas 70 g/m², ledit matériau vitreux (8) incluant des pigments dispersés en son sein.

25. - Récipient (1) selon la revendication 24 **caractérisé en ce que** ledit matériau vitreux (8) recouvre ladite fraction de la face interne (20) selon une masse surfacique qui est comprise entre 30 et 60 g/m²,

26. -Récipient (1) selon la revendication 25 **caractérisé en ce que** ledit matériau vitreux (8) recouvre ladite fraction de la face interne (20) selon une masse surfacique qui est comprise entre 40 et 60 g/m².

27. - Récipient (1) selon l'une des revendications 24 à 26 **caractérisé en ce que** ledit matériau vitreux (8) comprend un réseau minéral et/ou un réseau organo-minéral et/ou un réseau hybride mixte.

28. -Récipient (1) selon l'une des revendications 24 à 27 **caractérisé en ce que** ledit matériau vitreux (8) incorpore en son sein une ou plusieurs substance(s) fonctionnelle(s) choisie(s) dans le groupe suivant : agent microbicide, médicament.

29. - Récipient (1) selon l'une des revendications 24 à 28 **caractérisé en ce que** lesdits pigments incluent des pigments minéraux.

30. - Récipient (1) selon l'une des revendications 24 à 29 **caractérisé en ce que** lesdits pigments incluent des pigments organiques.

31. - Récipient (1) selon l'une des revendications 24 à 30 **caractérisé en ce qu'**il est conçu pour que ledit matériau vitreux (8) soit en contact avec ledit parfum corporel.

32. -Récipient (1) selon l'une des revendications 24 à 31 **caractérisé en ce que** ladite paroi (2) en verre est translucide ou transparente, de façon que ledit matériau vitreux (8) soit visible de l'extérieur du récipient (1).

33. - Récipient (1) selon l'une des revendications 24 à 32 **caractérisé en ce qu'**il constitue un flacon.

## Patentansprüche

1. - Herstellungsverfahren eines Behälters (1), der eine Glaswand (2) umfasst, die einen Aufnahmehohlraum (3) abgrenzt, wobei der Behälter (1) ausgebildet ist, um ein Körperparfum in dem Aufnahmehohlraum (3) aufzunehmen, wobei die Glaswand (2) eine Innenfläche (20) aufweist, die gegenüber dem Aufnahmehohlraum (3) liegt, wobei das Verfahren **dadurch gekennzeichnet ist, dass** es einen Abdeckungsschritt mindestens eines Bruchteils der Innenfläche (20) durch ein glasartiges Material umfasst, das gemäß einem Sol-Gel-Verfahren formuliert ist, so dass das glasartige Material (8) den Bruchteil der Innenfläche (20) gemäß einer flächenbezogenen Masse abdeckt, die 70 g/m² nicht überschreitet, wobei das glasartige Material (8) Pigmente aufweist, die in ihm dispergiert sind, wobei das Verfahren vor dem Abdeckungsschritt einen Bereitstellungsschritt oder Fertigungsschritt des Behälters (1) umfasst.

2. - Verfahren nach Anspruch 1, **dadurch gekennzeichnet, dass** die Pigmente mineralische Pigmente aufweisen.

3. - Verfahren nach Anspruch 1 oder 2, **dadurch gekennzeichnet, dass** die Pigmente organische Pigmente aufweisen.

4. - Verfahren nach einem der Ansprüche 1 bis 3, **dadurch gekennzeichnet, dass** das glasartige Material (8) den Bruchteil der Innenfläche (20) gemäß einer flächenbezogenen Masse, die zwischen 30 und 60 g/m² liegt, abdeckt.

5. - Verfahren nach Anspruch 4, **dadurch gekennzeichnet, dass** das glasartige Material (8) den Bruchteil der Innenfläche (20) gemäß einer flächenbezogenen Masse, die zwischen 40 und 60 g/m² liegt, abdeckt.

6. - Verfahren nach einem der Ansprüche 1 bis 5, **dadurch gekennzeichnet, dass** es vor dem Abdeckungsschritt einen Vorbereitungsschritt eines Sols, das im Wesentlichen homogen und flüssig ist, durch Mischen mindestens der folgenden Substanzen umfasst:
- einen Präkursor, der mit Alkoxygruppierungen versehen ist,
- ein Lösemittel, das bevorzugt alkoholisch ist, für den Präkursor,
- Wasser,
- Pigmente.

7. - Verfahren nach Anspruch 6, **dadurch gekennzeichnet, dass** die Substanzen, die zum Erhalten des Sols gemischt werden, außerdem eine oder mehrere funktionelle Substanzen umfassen, die aus der folgenden Gruppe ausgewählt sind: mikrobiozides Mittel, Arzneimittel.

8. - Verfahren nach einem der Ansprüche 6 und 7, **dadurch gekennzeichnet, dass** die Substanzen, die zum Erhalten des Sols gemischt werden, außerdem einen Hydrolysekatalysator und bevorzugt einen sauren Hydrolysekatalysator wie Essigsäure umfassen.

9. - Verfahren nach einem der Ansprüche 6 bis 8, **dadurch gekennzeichnet, dass** der Präkursor mindestens eine Organometallverbindung, bevorzugt ein Alkoholat, umfasst.

10. - Verfahren nach einem der Ansprüche 6 bis 9, **dadurch gekennzeichnet, dass** der Präkursor ein Hybridmatrixpräkursor ist, der es erlaubt, ein organomineralisches Netzwerk zu erhalten.

11. - Verfahren nach einem der Ansprüche 6 bis 10, **dadurch gekennzeichnet, dass** der Abdeckungsschritt einen Abscheidungsvorgang einer Schicht des Sols auf dem Bruchteil der Innenfläche (20) umfasst, während sich das Sol in dem im Wesentlichen flüssigen Zustand befindet.

12. - Verfahren nach Anspruch 11, **dadurch gekennzeichnet, dass** der Abscheidungsvorgang darin besteht, die Solschicht direkt auf dem Bruchteil der Innenfläche (20) abzuscheiden.

13. - Verfahren nach Anspruch 11 oder 12, **dadurch gekennzeichnet, dass** der Abscheidungsvorgang derart ausgeführt wird, dass die Schicht des Sols auf dem Bruchteil der Innenfläche (20) gemäß einer oberflächenbezogenen Masse abgeschieden wird, die 100 g/m² nicht überschreitet, und die bevorzugt zwischen 50 und 100 g/m² liegt, noch bevorzugter zwischen 70 und 90 g/m², zum Beispiel etwa 85 g/m².

14. - Verfahren nach einem der Ansprüche 11 bis 13, **dadurch gekennzeichnet, dass** der Abscheidungsvorgang ein Sprühen des Sols auf den Bruchteil der Innenfläche (20) umfasst.

15. - Verfahren nach Anspruch 14, **dadurch gekennzeichnet, dass** das Sprühen mit Hilfe einer Sprühdüse ausgeführt wird, die in den Aufnahmehohlraum (3) des Behälters (1) eingeführt wird, mit einer Dreh- und relativen Verschiebungsbewegung des Behälters (1), und wobei die Düse umgesetzt wird, damit die Sollösung gleichmäßig und homogen auf die gesamte Innenfläche (20) gesprüht wird.

16. - Verfahren nach einem der Ansprüche 6 bis 15, **dadurch gekennzeichnet, dass** es einen Gelbildungsschritt des Sols, das auf dem Bruchteil der Innenfläche (20) abgeschieden wurde, umfasst, wobei die Gelbildung durch Umsetzung der folgenden Reaktionen ausgeführt wird:
- Hydrolyse des Präkursors in Gegenwart von Wasser, das das Sol enthält, was zum Bilden von Silanolgruppierungen führt,
- und Kondensation der Silanolgruppierungen,
wobei der Gelbildungsschritt zum Erhalten einer Gelschicht, die den Bruchteil der Innenfläche (20) abdeckt, führt.

17. - Verfahren nach Anspruch 16, **dadurch gekennzeichnet, dass** es einen Trockenschritt der Gelschicht, die den Bruchteil der Innenfläche (20) abdeckt, durch Erhitzen der Gelschicht unter Bedingungen umfasst, die das Extrahieren des im Wesentlichen gesamten Lösemittels aus dem Gel erlauben, wobei sich dieses Letztere in das glasartige Material (8) verwandelt.

18. - Verfahren nach Anspruch 17, **dadurch gekennzeichnet, dass** der Trockenschritt einen Aufheizzyklus des Behälters (1) auf eine Temperatur zwischen 60 °C und 300 °C umfasst.

19. - Verfahren nach einem der Ansprüche 1 bis 18, **dadurch gekennzeichnet, dass** der Abdeckungsschritt umgesetzt wird, während der Bruchteil der Innenfläche (20) auf eine Temperatur zwischen 18 °C und 200 °C, bevorzugt auf Umgebungstemperatur gebracht wird.

20. - Verfahren nach Anspruch 19, **dadurch gekennzeichnet, dass** die Glaswand (2) erhitzt wird, um das Halten des Sols auf der Glaswand (2) zu verbessern.

21. - Verfahren nach einem der Ansprüche 6 bis 20, **dadurch gekennzeichnet, dass** es vor dem Abdeckungsschritt einen Aktivierungsschritt des Bruchteils der Innenfläche (20) umfasst, um das Haften des Sols an dem Bruchteil der Innenfläche (20) zu erleichtern.

22. - Verfahren nach einem der Ansprüche 1 bis 21, **dadurch gekennzeichnet, dass** das glasartige Material (8) ein mineralisches Netzwerk und/oder ein organomineralisches und/oder ein gemischtes Hybridnetzwerk umfasst.

23. - Verfahren nach einem der Ansprüche 1 bis 22, **dadurch gekennzeichnet, dass** der Behälter eine Flasche ist.

24. - Behälter (1), der eine Glaswand (2) umfasst, die einen Aufnahmehohlraum (3) abgrenzt, wobei der Behälter (1) ausgebildet ist, um ein Körperparfum in dem Aufnahmehohlraum (3) aufzunehmen, wobei die Glaswand (2) eine Innenfläche (20) aufweist, die gegenüber dem Aufnahmehohlraum (3) liegt, **dadurch gekennzeichnet, dass** mindestens ein Bruchteil der Innenfläche (20) von einem glasartigen Material (8) abgedeckt ist, das gemäß einem Sol-Gel-Verfahren formuliert ist, wobei das glasartige Material (8) den Bruchteil der Innenfläche (20) gemäß einer flächenbezogenen Masse, die 70 g/m² nicht überschreitet, abdeckt, wobei das glasartige Material (8) Pigmente aufweist, die in ihm dispergiert sind.

25. - Behälter (1) nach Anspruch 24, **dadurch gekennzeichnet, dass** das glasartige Material (8) den Bruchteil der Innenfläche (20) gemäß einer flächenbezogenen Masse, die zwischen 30 und 60 g/m² liegt, abdeckt.

26. - Behälter (1) nach Anspruch 25, **dadurch gekennzeichnet, dass** das glasartige Material (8) den Bruchteil der Innenfläche (20) gemäß einer flächenbezogenen Masse, die zwischen 40 und 60 g/m² liegt, abdeckt.

27. - Behälter (1) nach einem der Ansprüche 24 bis 26, **dadurch gekennzeichnet, dass** das glasartige Material (8) ein mineralisches und/oder ein organomineralisches Netzwerk und/oder ein gemischtes Hybridnetzwerk umfasst.

28. - Behälter (1) nach einem der Ansprüche 24 bis 27, **dadurch gekennzeichnet, dass** das glasartige Material (8) eine oder mehrere funktionelle Substanzen enthält, die aus der folgenden Gruppe ausgewählt sind: mikrobiozides Mittel, Arzneimittel.

29. - Behälter (1) nach einem der Ansprüche 24 bis 28, **dadurch gekennzeichnet, dass** die Pigmente mineralische Pigmente enthalten.

30. - Behälter (1) nach einem der Ansprüche 24 bis 29, **dadurch gekennzeichnet, dass** die Pigmente organische Pigmente enthalten.

31. - Behälter (1) nach einem der Ansprüche 24 bis 30, **dadurch gekennzeichnet, dass** er konzipiert ist, damit das glasartige Material (8) mit dem Körperparfum in Berührung ist.

32. - Behälter (1) nach einem der Ansprüche 24 bis 31, **dadurch gekennzeichnet, dass** die Glaswand (2) derart durchscheinend oder durchsichtig ist, dass das glasartige Material (8) von außerhalb des Behälters (1) sichtbar ist.

33. - Behälter (1) nach einem der Ansprüche 24 bis 32, **dadurch gekennzeichnet, dass** er eine Flasche bildet.

## Claims

1. - A method of fabricating a container (1) comprising a glass wall (2) defining a reception cavity (3), said container (1) being designed to contain in said cavity (3) a body fragrance, said glass wall (2) presenting an inside face (20) situated facing said reception cavity (3), said method being **characterized in that** it comprises a step of covering at least a fraction of said inside face (20) in a vitreous material prepared using a sol-gel process so that said vitreous material (8) covers said fraction of the inside face (20) at a mass per unit area that does not exceed 70 g/m², said vitreous material (8) including pigments dispersed within it, said method comprising, prior to said covering step, a step of supplying, or of fabricating, said container (1).

2. - A method according to claim 1, **characterized in that** said pigments includes inorganic pigments.

3. - A method according to claim 1 or 2, **characterized in that** said pigments includes organic pigments.

4. - A method according to any one of claims 1 to 3, **characterized in that** said vitreous material (8) covers said fraction of the inside face (20) at a mass per unit area that lies in the range 30 g/m² to 60 g/m².

5. - A method according to claim 4, **characterized in that** said vitreous material (8) covers said fraction of the inside face (20) at a mass per unit area that lies in the range 40 g/m² to 60 g/m².

6. - A method according to any one of claims 1 to 5, **characterized in that**, prior to said covering step, it includes a step of preparing a substantially uniform and liquid sol by mixing together at least the following substances:
- a precursor having alkoxy groups;
- a solvent for said precursor, preferably an alcohol-based solvent;
- water;
- pigments.

7. - A method according to claim 6, **characterized in that** said substances mixed together to obtain said sol further comprise one or more functional substances selected from the following group: microbiocidal agents, medicines.

8. - A method according to any one of claims 6 and 7, **characterized in that** said substances mixed together to obtain said sol further comprise a hydrolysis catalyst, and preferably an acid hydrolysis catalyst such as acetic acid.

9. - A method according to any one of claims 6 to 8, **characterized in that** the precursor includes at least one organometallic compound, preferably an alcoholate.

10. - A method according to any one of claims 6 to 9, **characterized in that** said precursor is a precursor for a hybrid matrix making it possible to obtain an organo-inorganic lattice.

11. - A method according to any one of claims 6 to 10, **characterized in that** the covering step includes an operation of depositing a layer of said sol on said fraction of said inside face (20) while said sol is in a substantially liquid state.

12. - A method according to claim 11, **characterized in that** the deposition operation consists in depositing said sol layer directly on said fraction of said inside face (20).

13. - A method according to claim 11 or claim 12, **characterized in that** the deposition operation is performed in such a manner as to deposit said layer of said sol on said fraction of the inside face (20) at a mass per unit area that does not exceed 100 g/m², and that preferably lies in the range 50 g/m² to 100 g/m², more preferably in the range 70 g/m² to 90 g/m², e.g. about 85 g/m².

14. - A method according to any one of claims 11 to 13, **characterized in that** said deposition operation comprises spraying said sol onto said fraction of the inside face (20).

15. - A method according to claim 14 **characterized in that** said spraying is performed using a spray nozzle that is inserted into the reception cavity (3) of the container (1), with the container (1) and the nozzle being caused to move relative to each other in rotation and in translation so that the sol solution is sprayed uniformly and in a homogeneous way over the entire inside face (20).

16. - A method according to any one of claims 6 to 15, **characterized in that** it includes a step of gelling the sol deposited on said fraction of the inside face (20), said gelling being performed by implementing the following reactions:
- hydrolyzing the precursor in the presence of the water that contains the sol, thereby leading to the formation of silanol groups; and
- condensing said silanol groups;
said gelling step leading to a layer of gel being obtained that covers said fraction of the inside face (20).

17. - A method according to claim 16, **characterized in that** it includes a step of drying said gel layer covering said fraction of the inside face (20) by heating said gel layer under conditions that enable substantially all of said solvent to be extracted from the gel, the gel then transforming into said vitreous material (8).

18. - A method according to claim 17, **characterized in that** the drying step comprises a cycle of heating the container (1) to a temperature lying in the range 60°C to 300°C.

19. - A method according to any one of claims 1 to 18, **characterized in that** said covering step is implemented while said fraction of the inside face (20) lies at a temperature in the range 18°C to 200°C, preferably at ambient temperature.

20. - A method according to claim 19, **characterized in that** said glass wall (2) is heated so as to improve the retention of the sol on the glass wall (2).

21. - A method according to any one of claims 6 to 20, **characterized in that**, prior to said covering step, it includes a step of activating said fraction of the inside face (20) in order to facilitate bonding of the sol with said fraction of the inside face (20).

22. - A method according to any one of claims 1 to 21, **characterized in that** said vitreous material (8) comprises an inorganic lattice and/or an organo-inorganic lattice, and/or a mixed hybrid lattice.

23. - A method according to any one of claims 1 to 22, **characterized in that** said container is a bottle.

24. - A container (1) comprising a glass wall (2) defining a reception cavity (3), said container (1) being designed to contain in said cavity (3) a body fragrance, said glass wall (2) presenting an inside face (20) situated facing said reception cavity (3), the container being **characterized in that** at least a fraction of said inside face (20) is covered in a vitreous material (8) prepared using a sol-gel process, said vitreous material (8) covering said fraction of the inside face (20) at a mass per unit area that does not exceed 70 g/m², said vitreous material (8) including pigments dispersed within it.

25. - A container (1) according to claim 24, **characterized in that** said vitreous material (8) covers said fraction of the inside face (20) at a mass per unit area that lies in the range 30 g/m² to 60 g/m².

26. - A container (1) according to claim 25, **characterized in that** said vitreous material (8) covers said fraction of the inside face (20) at a mass per unit area that lies in the range 40 g/m² to 60 g/m².

27. - A container (1) according to any one of claims 24 to 26, **characterized in that** said vitreous material (8) comprises an inorganic lattice and/or an organo-inorganic lattice, and/or a mixed hybrid lattice.

28. - A container (1) according to any one of claims 24 to 27, **characterized in that** said vitreous material (8) includes within it one or more functional substances selected from the following group: microbiocidal agents, medicines.

29. - A container (1) according to any one of claims 24 to 28, **characterized in that** said pigments include inorganic pigments.

30. - A container (1) according to any one of claims 24 to 29, **characterized in that** said pigments include organic pigments.

31. - A container (1) according to any one of claims 20 to 26, **characterized in that** it is designed so that said vitreous material (8) is in contact with said body fragrance.

32. - A container (1) according to any one of claims 24 to 31, **characterized in that** said glass wall (2) is translucent or transparent so that said vitreous material (8) is visible from outside the container (1).

33. - A container (1) according to any one of claims 24 to 32, **characterized in that** it constitutes a bottle.
